# EUROPEAN PATENT SPECIFICATION

(11) **EP 3 294 490 B1**
(45) Date of publication and mention of the grant of the patent: **05.05.2021**
(21) Application number: 16722892.3
(22) Date of filing: 13.05.2016
(51) Int. Cl.: B23K 35/28, B23K 35/40, B23K 35/00, B23K 35/02, C22C 21/00, C22C 21/02, C22C 21/06, C22C 21/08, C22C 21/12, C22F 1/04

(54) **A METHOD OF JOINING TWO COMPONENTS, A JOINT FORMED FROM THE METHOD AND A METHOD OF BONDING AN EXTRUDATE TO A COMPONENT**
EIN VERFAHREN ZUM VERBINDEN ZWEIER KOMPONENTEN, EINE NACH DIESEM VERFAHREN HERGESTELLTE VERBINDUNG UND EIN VERFAHREN ZUM VERBINDEN EINES EXTRUDATS MIT EINER KOMPONENTE
UNE MÉTHODE D'ASSEMBLAGE DE DEUX COMPOSANTS, UN JOINT FORMÉ À PARTIR DE LA MÉTHODE ET UNE MÉTHODE DE LIAISON D'UN EXTRUDAT À UN COMPOSANT

(30) Priority: 14.05.2015 GB 201508278
(43) Date of publication of application: 21.03.2018
(73) Proprietor: HyBond AS, 7491 Trondheim (NO)
(72) Inventor: GRONG, Øystein, N-7055 Ranheim (NO); AAKENES, Ulf Roar, N-7507 Stjørdal (NO); AUSTIGARD, Tor Gunnar, N-6490 Eide (NO); BJERING, Torbjørn, N-1397 Nesøya (NO)
(74) Representative: Dehns
(86) International application number: PCT/EP2016/060926
(87) International publication number: WO 2016/180985

(56) References cited:
- EP-A1- 2 514 555
- WO-A1-99/07906
- WO-A1-03/043775
- WO-A2-2004/046402
- WO-A2-2010/119070
- CN-A- 103 695 735
- CN-B- 101 941 122
- US-A1- 2008 121 317

## Description

Broadly, the present invention relates to the use of an extrusion material, e.g. filler wire, in hybrid metal extrusion and bonding processes.

A number of techniques are known to be used to join two materials together, in particular light metals, such as aluminium.

One of these techniques is fusion welding, where both the base metal and possible filler metal are melted by an electric arc, electron beam or laser beam, allowing metal to metal bonding to be achieved in the trailing part of the weld pool during crystallisation. In fusion welding only a fraction of the energy supplied contributes to the melting and thereby to bonding. Most of the energy supplied leads to a local heating of the base metal and the formation of a so-called heat-affected zone (in the literature commonly referred to as HAZ) around the weld joint. This zone represents a problem, because the resulting microstructural changes lead to a permanent mechanical degradation of the parent metal. The properties of the weld zone will thus become the limiting factor in engineering design and, in practice, determine the load-bearing capacity of the component. In addition, the excess energy (i.e. heat) supplied leads to high residual stresses in the weld region as well as to global deformations and distortions. These problems are greater in light metal, such as aluminium, welding than in steel welding, since the possibilities of taking the necessary precautionary actions, e.g. by modifying the HAZ microstructure through adjustment of the base metal chemical composition, are more difficult in the former case.

In view of these problems more effective welding processes, like laser welding and electron beam welding, have been used which provide a much narrower HAZ. These techniques, however, introduce other problems related to the hot cracking resistance and pore formation in the fusion zone. In addition, they suffer from the disadvantage of more costly and less versatile equipment. Furthermore, the tolerance requirements are much more severe due to the fact that a filler metal is usually not added.

In the past, several attempts have been made in order to develop alternative techniques for joining of light metals. Examples include friction welding or a variant known as friction stir welding (FSW).

In FSW the two plates to be joined together are pressed firmly against each other while a rotating tool is moved along the interface (edge) between them, removing the oxide layer that, at least for aluminium, will always be present on the surface.

Even though considerable frictional heating occurs at the interface between the rotating tool and the parent aluminium plates, the energy supplied, and thereby the heat generated, is less than in fusion welding, so that the base metal near the joint will not melt and reach a liquid state. Friction stir welding is thus an example of a solid state joining technique, which represents an improvement compared to fusion welding, as several of the common problems are thereby reduced, namely development of high residual stresses and hot cracks, pore formation and a low corrosion resistance. On the other hand, this technique is encumbered with several disadvantages, one being the requirement that the surfaces to be joined need to exactly match each other, as there is no use of a filler metal. Another disadvantage is that the components to be joined must be pressed against each other with a considerable force, which means that the method requires heavy and rigid equipment. Finally, even this type of friction welding gives rise to the formation of a wide HAZ, where the resulting microstructural changes lead to permanent softening of the precipitation strengthened metal.

Among other methods of joining, brazing, riveting and adhesive bonding should be mentioned. One or more of these methods may be convenient for some areas of application, but, in general, they provide a low safety against failure and are therefore not realistic alternatives to welding in load or weight carrying constructions.

An alternative solid state method for joining components, for example as described in WO 03/043 775, is known which is suitable for joining aluminium (or other light metal) components for structural applications. This method involves removing oxide from the surfaces to be joined immediately prior to extruding a filler material into a gap between the surfaces to be joined to bond the two surfaces to each other. This method may be referred to as a hybrid metal extrusion and bonding (HYB) process. This method is based on the principle of continuous extrusion of a filler/bonding material, and the aim is to reduce or eliminate the disadvantages of the excessive heating related to the FSW method and other prior art methods.

The basic idea behind the HYB process is to enable solid state joining of aluminium components without leading to the formation of a weak/soft weld zone as in conventional fusion welding and FSW.

This HYB process requires an extrusion/filler material. This is because it utilizes continuous extrusion as a technique to squeeze the filler metal (FM) coming from the extruder into the groove between the two plates to be joined under high pressure to achieve metallic bonding.

Filler metals are widely used in fusion welding. For example, in MIG welding of aluminium alloys three different types of filler metals are commercially available; pure aluminium, aluminium-silicon alloys with about 5 wt% Si and aluminium-magnesium alloys with about 5 wt% Mg (some of them may also contain up to 1 wt% Mn). The latter ones are strongly overalloyed with respect to Si or Mg in order to reduce the risk of solidification cracking during welding. Solidification cracks will inevitably form in the fusion zone if the filler metal composition is similar to that of the base metal of at least one of the components to be joined.

In solid state welding (including FSW) of aluminium alloys, as discussed above, no filler metals are employed. Therefore, dedicated filler metals for specific solid state joining applications are not commercially available. Instead, they must be developed if a demand should arise.

It has been found that the filler materials used in fusion welding are not suitable for use in the HYB process. As a result, there is a need for a filler material which can be used in the HYB process to provide a strong and reliable joint.

In a first aspect the present invention provides a method of joining two components using a hybrid metal extrusion and bonding process, the method comprising: providing the two components, wherein the components each have a joining surface which is to be joined to the other component; providing an aluminium extrusion material for use in a hybrid metal extrusion and bonding process, wherein the aluminium extrusion material is made of 2xxx, 5xxx, 6xxx, 7xxx or 8xxx aluminium alloy, wherein the composition of the extrusion material comprises: 0 to 0.25 wt% iron; at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and, except when the aluminium alloy of the aluminium extrusion material is in the 2xxx series, 0 to 0.05 wt% copper, wherein the microstructure of the extrusion material is a deformed microstructure, and wherein the nanostructure of the extrusion material comprises an aluminium matrix with dislocations and dispersoids, and wherein at least 50% of the alloying elements other than the dispersoid-forming elements and the iron are in solid solution in the aluminium matrix; removing oxide from the joining surfaces of the two components, and extruding the aluminium extrusion material between the joining surfaces of the two components.

In a second aspect the present invention provides a method of bonding an extrudate to a component using a hybrid metal extrusion and bonding process, the method comprising: providing the component, wherein the component has a surface on which the extrudate will be deposited and bonded; providing an aluminium extrusion material for use in a hybrid metal extrusion and bonding process, wherein the aluminium extrusion material is made of 2xxx, 5xxx, 6xxx, 7xxx or 8xxx aluminium alloy, wherein the composition of the extrusion material comprises: 0 to 0.25 wt% iron; at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and, except when the aluminium alloy of the aluminium extrusion material is in the 2xxx series, 0 to 0.05 wt% copper, wherein the microstructure of the extrusion material is a deformed microstructure, and wherein the nanostructure of the extrusion material comprises an aluminium matrix with dislocations and dispersoids, and wherein at least 50% of the alloying elements other than the dispersoid-forming elements and the iron are in solid solution in the aluminium matrix; removing oxide from the surface of the component, and extruding the aluminium extrusion material onto the surface of the component.

The extrusion material is a material that will in use be extruded, i.e. it is a material that is to be extruded.

The extrusion material may be a wire.

The extrusion material may be referred to as a filler wire, particularly when the hybrid metal extrusion and bonding process is used to join two components together.

The method of the first aspect may be for joining two aluminium components, i.e. the filler wire may be for use in a hybrid metal extrusion and bonding process joining two aluminium components.

The composition of the extrusion material (filler wire) in the first aspect may be of the same aluminium alloy series as the composition of at least one of the aluminium components to be joined.

The extrusion material may be manufactured from an aluminium rod wherein the composition of the aluminium rod comprises: 0 to 0.25 wt% iron; at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and, except when the aluminium alloy of the aluminium rod is in the 2xxx series, 0 to 0.05 wt% copper, wherein the microstructure of the aluminium rod is a deformed microstructure; and wherein the nanostructure of the aluminium rod comprises an aluminium matrix with dislocations and dispersoids, and wherein at least 50% of the alloying elements other than the dispersoid-forming elements and the iron are in solid solution in the aluminium matrix.

The composition of the aluminium rod may be of the same aluminium alloy series as the composition of at least one of the components in the method of the first aspect or the same aluminium alloy series as the composition of the component in the method of the second aspect.

In the second aspect the component may be made of aluminium. The composition of the extrusion material may be of the same aluminium alloy series as the composition of the aluminium component.

In a third aspect the present invention provides a joint formed from the method of the first aspect. The joint comprises: the two components; and an aluminium filler material therebetween, the aluminium filler formed as a result of the step of extruding the aluminium extrusion material.

In another aspect the present invention provides a joint formed from the method of the second aspect, the joint comprising: a component; and an aluminium extrudate, wherein the aluminium extrudate has been bonded to the component as a result of the step of extruding the aluminium extrusion material onto the surface of the component.

The method of the first or second aspects may comprise manufacturing an (the) aluminium rod for manufacturing the extrusion material (filler wire) by: providing an aluminium melt, wherein the aluminium melt is made of 2xxx, 5xxx, 6xxx, 7xxx or 8xxx series aluminium alloy, and wherein the composition of the aluminium melt comprises 0 to 0.25 wt% iron; at least 0.05 wt% dispersoid-forming elements, wherein the dispersoid forming elements comprise 0 to 1.2 wt% manganese, 0 to 0.25 wt% chromium, 0 to 0.25 wt% zirconium and 0 to 0.25 wt% scandium; and, except when the aluminium alloy of the aluminium rod is in the 2xxx series, 0 to 0.05 wt% copper; casting the aluminium melt to produce an aluminium billet, homogenizing the aluminium billet; hot deforming (e.g. hot extruding or hot rolling) the billet to form the aluminium rod; and quenching the aluminium rod, wherein the microstructure of the quenched aluminium rod is a deformed microstructure; and wherein the nanostructure of the quenched aluminium rod comprises an aluminium matrix with dislocations and dispersoids, and wherein at least 50% of the alloying elements other than the dispersoid-forming elements and the iron are in solid solution in the aluminium matrix.

In the case where at least one of and/or the component(s) is/are made of aluminium in the method of the first and second aspects respectively, the composition of the aluminium melt may be of the same aluminium alloy series as the composition of at least one of the aluminium components and/or the composition of the aluminium component.

The hot deforming of the billet may be performed down to the final desired diameter of the extrusion material (filler wire). In this case, it may not be necessary to further process the formed aluminium rod to form the extrusion material (filler wire), i.e. the formed aluminium rod may be an extrusion material (filler wire) for use in a hybrid extrusion and bonding method.

The method of the first or second aspect may comprise manufacturing the extrusion material (filler wire) by: providing an (the) aluminium rod; wherein the aluminium rod is made of 2xxx, 5xxx, 6xxx, 7xxx or 8xxx aluminium alloy, and wherein the composition of the aluminium rod comprises: 0 to 0.25 wt% iron; at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and, except when the aluminium alloy of the aluminium rod is in the 2xxx series, 0 to 0.05 wt% copper, wherein the microstructure of the aluminium rod is a deformed microstructure; and wherein the nanostructure of the aluminium rod comprises an aluminium matrix with dislocations and dispersoids, and wherein at least 50% of the alloying elements other than the dispersoid-forming elements and the iron are in solid solution in the aluminium matrix, and deforming/processing the aluminium rod to form the extrusion material (filler wire), wherein the microstructure of the extrusion material (filler wire) is a deformed microstructure; and wherein the nanostructure of the extrusion material (filler wire) comprises an aluminium matrix with dislocations and dispersoids, and wherein at least 50% of the alloying elements other than the dispersoid-forming elements and the iron are in solid solution in the aluminium matrix.

Wherein deforming/processing the aluminium rod to form the extrusion material (filler wire) may comprise cold shaving the aluminium rod and/or drawing the aluminium rod.

For example, the aluminium rod may be shaved down to a final desired diameter of extrusion material/filler wire or the aluminium rod may be drawn to a final desired diameter of extrusion material. Alternatively, the aluminium rod may be shaved and then drawn to form the extrusion material/filler wire.

At least one, or both, of the components of the first aspect and/or the component of the second aspect may be a non-aluminium component, such as a steel component. The method may comprise bonding an aluminium extrudate to a non-aluminium component.

The hybrid metal extrusion and bonding process of either of the first or second aspects may be the process as described in WO 03/043775. The device used in the hybrid metal extrusion and bonding process may be the device as described in WO 2013/095160 or any other variant of the device described in WO 2013/095160.

The method of the first aspect comprises removing oxide from the surfaces to be joined immediately prior to joining and filling a groove between the components with a filler material that is provided by means of extruding a filler wire. Supply of oxygen to the groove may be simultaneously restricted to a required extent during the extrusion and bonding process. As mentioned, the two components may both be aluminium components. Alternatively, only of the components may be an aluminium component and the other component may be a non-aluminium component. For example, one component may be an aluminium component and one component may be a steel component. Thus, the method of the first aspect may comprise joining two components, wherein at least one of the components is an aluminium component.

Neither component may be an aluminium component.

In the method of the second aspect, the extrusion material may be extruded and bonded onto a component to form beads on the component and/or to cover/plate the component.

In the method of the second aspect, the extrusion material may be extruded and bonded to the surface of an already deposited extruded extrusion material (i.e. the component on which the extrudate is deposited may be already extruded and bonded material). Thus, the extrusion material may be used in a hybrid metal extrusion and bonding method which results in extrusion and bonding additive layer manufacturing (or additive layer manufacturing, additive manufacturing or 3D printing).

The extrusion material (filler wire) used in the method of the first and/or second aspect and the filler material (i.e. extrudate) of the produced product, e.g. a joint, will have the same composition. Both the shape of the extrusion material and the filler material (i.e. extrudate) and to some extent the micro-, nano- and atomic structure of the extrusion material and the filler material will be different due to the frictional heating and severe plastic deformation the extrusion material undergoes during its passage through the extruder to the point, e.g. join, where it consolidates to form the filler material (i.e. extrudate). However, the micro-, nano- and atomic structure of the filler material (i.e. extrudate) will depend on the micro-, nano- and atomic structure of the original extrusion material.

In fusion welding the filler wire will completely lose its structural identity because of the re-melting. Therefore, it is not important to control the microstructure of the filler wire. It has been realised that in contrast, in the HYB process, because the extrusion material /filler wire is not melted and resolidified during the joining process the filler material (i.e. extrudate) will have a microstructure which is dependent on the microstructure of the extrusion material used in the process. Thus it is important that the extrusion material has an appropriate microstructure and nanostructure that will ensure a strong and reliable bond, i.e. a joint, after it has been used in the HYB process.

It has been realised that for this HYB process the appropriate microstructure is a deformed microstructure and the appropriate nanostructure is an aluminium matrix with dislocations and dispersoids and with at least 50% of the alloying elements other than the dispersoid-forming elements and the iron in solid solution in the aluminium matrix.

The process of manufacturing and storing the extrusion material before use may be such that the majority of alloying elements are retained in solid solution in the aluminium matrix. This is so that at the point at which the extrusion material is being used at least 50% of the alloying elements other than the dispersoid-forming elements and the iron may be in solid solution in the aluminium matrix.

When selecting a suitable extrusion material (filler wire) to produce a desired filler material, the conditions that the material, e.g. wire, is subjected to during the extrusion and bonding process to form the extrudate must be taken into account and compensated for.

The filler material of a join may have a strength, ductility/toughness and/or corrosion resistance which are better than those properties of at least one of the components of the joint. The extrusion material may also have an interfacial bond strength which is at least as strong as the component on which it is deposited, or in the case of a joint between two components, at least as strong as at least one of the components of the joint. This may be achieved by controlling impurities and deformation mode at the bond interface.

When the aluminium alloy extrusion material is extruded to form the extrudate, the aluminium alloy undergoes both frictional heating and severe plastic deformation. However, this usually occurs, i.e. may occur, without leading to surface expansion and subsequent break-up of the oxide layer on the outer surface of the extrusion material. Therefore, unless surface cleaning is achieved by some other means (e.g. through shaving and proper cleaning of the extrusion material before use), all this contamination may end-up in the groove between the two components to be joined and accumulate at the contact surface between the extrusion material and the component or components. This, in turn, may reduce the interfacial bond strength.

Thus, the present invention may comprise shaving and cleaning of the extrusion material before use. Although, this is not essential.

It has been realised that the desired joint quality and properties may only be achieved through the use of a specially designed extrusion material, which, after passage through the extruder, meets the requirements being set to the extrudate in the as-welded condition.

Prediction of the desirable extrusion material properties from those of the extrudate requires detailed knowledge of the instantaneous values of the temperature, strain and strain rate during the extrusion and joining.

Knowledge of the rapid changes in temperature, strain and strain rate during extrusion and joining may be used to predict how the microstructural and nano/atomic state of the material will change when the extrusion material is extruded to form the extrudate.

It has been found that the HYB method is particularly useful for joining of medium and high strength aluminium alloys for structural applications, where the load-bearing capacity of the joint is of particular concern. Therefore the aluminium components to be joined may comprise medium and high strength aluminium alloys.

It will be appreciated that references herein to aluminium does not necessarily refer to pure aluminium and may refer to both aluminium alloy and pure aluminium as appropriate.

The joined components (in the case of joining two components) may be used in structural applications.

The joint (if a joint is formed) may be a load-bearing joint.

The aluminium alloys of the component(s) may be one of the series of aluminium alloys as defined by the international classification system for wrought aluminium alloys. For example the aluminium component(s) may be made of an alloy which is in (i) the 2xxx series (Al-Cu alloys), (ii) the 5xxx (Al-Mg alloys), (iii) the 6xxx series (Al-Mg-Si alloys),(iv) the 7xxx series (Al-Zn-Mg alloys) or (v) the 8xxx series (such as Al-Li alloys or aluminium alloyed with another element that does not fall within any of the other series). Thus the aluminium component(s) may be made of 2xxx, 5xxx, 6xxx,7xxx or 8xxx series aluminium alloy.

The major alloying elements in each series are; (i) Cu in the 2xxx series, (ii) Mg in the 5xxx series, (iii) Si and Mg in the 6xxx series, (iv) Zn and Mg in the 7xxx series, and (v) alloyed with other elements (such as lithium) which are not covered by other series in the 8xxx series. The upper and lower limits for these series-specific elements in the extrusion material alloys are defined by the international classification system for wrought aluminium alloys. Accordingly, using Al-Mg-Si alloys as an example, the appropriate designation for an extrusion material belonging to this alloy category/series would then be AA6xxx - grade A, where grade A refers to a specific content of the major alloying elements Si and Mg.

Within each of these series there are a number of aluminium alloy grades which each cover a range of compositions of aluminium alloys.

The extrusion material may be suitable for solid joining of, or bonding to, all types of structural aluminium alloys which may belong to one of these five series employing the HYB method.

It has been realised that to make the extrusion material suitable for thermomechanical processing and subsequent extrusion and bonding using the HYB process as in the first or second aspects, the following constraints are imposed on the content of other elements in the composition of the aluminium rod/ extrusion material /extrudate:
1) the iron content is restricted to values below 0.25 wt%, regardless of what is stated in the international base metal standards for the series of the aluminium component. This is because iron can have a detrimental effect on the microstructure and properties of the filler material after it has been extruded.
2) except in aluminium rod/ extrusion material /extrudate alloys where Cu is a major alloying element (as in the 2xxx series), copper may be regarded as an impurity element. Hence, the Cu content of the other alloys, such as 5xxx, 6xxx, 7xxx and 8xxx extrusion material alloys, is restricted to values below 0.05 wt%, regardless of what is stated in the international base metal standards for the series of the aluminium alloy component. This is because copper may be detrimental to the corrosion resistance of the extrudate.
3) at least 0.05 wt% of dispersoid-forming elements, manganese, chromium, zirconium and scandium. These elements may be regarded as minor alloying elements. Belonging to the group of minor alloying elements means that they may be deliberately added in a controlled manner, either separately or in combination, to the extrusion material alloys. The levels of these minor elements in the alloys are within the following limits, regardless of what is stated in the international base metal standards for the series of the aluminium alloy, i.e. Mn between 0 and 1.2 wt%, Cr between 0 and 0.25 wt%, Zr between 0 and 0.25 wt% and Sc between 0 to 0.25 wt%. The elements are added as they are dispersoid forming elements which can help to prevent recrystallization of the filler material.
4) the content of other elements of the alloy composition of aluminium rod/ extrusion material /extrudate, should preferably lie within the composition range of the aluminium alloy series which at least one of the component(s) to be joined belong to, assuming that the component(s) or at least one of them is made of aluminium.

The composition of the aluminium rod/ extrusion material /extrudate may also contain other well-known alloying elements such magnesium, zinc, silicon, titanium, boron etc.

The precise composition of the aluminium rod/ extrusion material /extrudate material will depend on a number of factors such as the components to be joined and the particular application/environment of the final joint/deposited extrudate.

As an example, when at least one of the components to be joined, or the component on which extrudate, i.e. filler material, is being deposited, is a 6xxx series alloy the aluminium rod/filler wire/filler material may be an AA6082 aluminium alloy with the further constraints on the composition specified above. Specifically this alloy may consist of 0.7 to 1.3 wt% Si, 0.0 to 0.25 wt% Fe, 0.0 to 0.05 wt% Cu, 0.0 to 1.2 wt% Mn, 0.6 to 1.2 wt% Mg, 0.0 to 0.2 wt% Zn, 0.0 to 0.1 wt% Ti, 0.0 to 0.25 wt% Cr, 0.0 to 0.25 wt% Zr, 0.0 to 0.25 wt% Sc (wherein the total amount of Mn, Cr, Zr and Sc is at least 0.05 wt%) and balance aluminium with unavoidable impurities.

The composition of the aluminium rod/ extrusion material /extrudate material may also contain a grain refiner. This grain refiner may be added to the melt immediately before a casting operation in order to refine the as-cast microstructure. The grain refiner may, for example, be AlB₂ or TiB₂.

When the extrusion material composition already contains Zr and/or Sc, the use of additional grain refiners may be superfluous thus in these cases the extrusion material may not contain any grain refiners. This is because these two minor alloying elements also may act as grain refiners during solidification due to Al₃Zr and Al₃Sc compound formation. Both phases are known to provide favourable sites for heterogeneous nucleation of new aluminium grains ahead of the advancing solid/liquid interface.

The aluminium rod/ extrusion material /extrudate material may have a composition similar to that of at least one of the aluminium components being joined or an aluminium component on which the extrudate is deposited, but, whilst it could be, may not be identical due to the further constraints applied to the composition. Due to the constraints on the composition the aluminium rod/ extrusion material extrudate material may have a composition which is a different aluminium alloy grade to that of the aluminium component(s), in cases where the component(s) is/are aluminium.

In the case of two aluminium components being joined, the two aluminium components being joined may have compositions which are of the same aluminium series. In this case the aluminium rod/filler wire/filler material has a composition which is in the same series as that of both of the aluminium components being joined.

In the case of two aluminium components being joined, if the two aluminium components being joined have compositions which are in different series the aluminium rod/filler wire/filler material may have a composition which is in the same series as the stronger of the two aluminium components.

The two components being joined may have compositions which are the same grade of aluminium as each other.

The two components being joined may have identical aluminium alloy compositions.

It will be appreciated that the aluminium melt, aluminium rod, extrusion material, i.e. filler wire, and extrudate, i.e. filler material, in a given case will all have the same composition (as this is not affected by the processing steps). Thus, any discussion herein of the composition and optional features of the composition of each of these stages of the aluminium material are applicable to the extrusion material in any form (i.e. whether the original melt, the aluminium rod, the aluminium extrusion material or the extrudate after the HYB process) after the composition has been prepared in the melt.

The microstructure of the aluminium rod/ extrusion material /extrudate is a deformed microstructure. This may be referred to as a fibrous microstructure. This microstructure may be the microstructure when recrystallization has not occurred, i.e. a non-recrystallized microstructure.

A recrystallized grain structure is highly undesirable and should be avoided. This is because it may survive during subsequent extrusion and joining and contribute to a reduced strength, toughness and corrosion resistance of the extrusion material in the as-welded, i.e. bonded, condition.

The microstructure may have deformed (elongated) grains. The microstructure may not have recrystallized (equiaxed) grains.

The grains of the microstructure may be relatively long and thin as opposed to relatively rounded.

The length to width ratio of the deformed grains may be at least 5:1. This length to width ratio may be the average length to width ratio of the grains in the microstructure or it may be the length to width ratio of at least 50% of the grains of the microstructure, as for example determined by means of optical or scanning electron microscopy.

At the nano/atomic scale aluminium rod/extrusion material/extrudate material comprises an aluminium matrix with dispersiods and dislocations therein and at least 50% of the alloying elements other than the dispersoid-forming elements and the iron being in sold solution in the aluminium matrix.

The nano/atomic scale of the aluminium rod/extrusion material/extrudate material may also comprise small iron particles.

The nano/atomic scale of the aluminium rod/extrusion material/extrudate material may consist of an aluminium matrix with dispersoids, small iron particles and dislocations therein, wherein substantially all (i.e. at least 50%) of the alloying elements not in the dispersoids or iron particles are in solid solution in the aluminium matrix.

The size of the small iron particles may be up to 4µm in size, for example they may be in the range from 0.1 to 4 µm. The number density of the dislocations may be higher than 10¹³ per m², as for example determined using high resolution transmission electron microscopy.

The at least 50% of the alloying elements other than the dispersoid-forming elements and the iron in solid solution in the aluminium matrix, may be, as for example determined using dedicated electrical conductivity measurements. This means that the highest work hardening potential of the extrusion material/extrudate material can be achieved during subsequent extrusion and joining using the HYB process.

If adequate process control is not undertaken during the aluminium rod/ extrusion material manufacturing, solute-rich metastable precipitates may appear inside the aluminium matrix at room temperature after cooling along with large Fe-particles and coarse solute-rich equilibrium phases. This type of structure is highly undesirable because it reduces both the work hardening potential, the tensile yield strength and ductility, the impact toughness and the corrosion resistance of the extrusion material following extrusion and bonding, and should be avoided.

Therefore, the nanostructure should not contain solute-rich metastable precipitates, large iron particles (i.e. iron particles which are greater than 4 µm in diameter) and/or coarse solute-rich equilibrium phases, as for example determined using optical or scanning electron microscopy.

The extrusion material nano-/atomic structure may also comprise clusters and GP-zones, as for example determined using high resolution transmission electron microscopy. These may be present due to natural aging which occurs at room temperature due to short-range diffusion of solute atoms. Because the clusters/GP-zones have a low thermal stability they will readily dissolve inside the extrusion chamber on re-heating of the HYB process and therefore not cause problems in the HYB case as far as the extrusion material properties are concerned. However, these may be taken into account during wire shaving and/or cold drawing that may optionally occur during manufacture because of the associated yield strength increase, which affects the drawability of the FW alloys.

Turning to the manufacturing route and processing requirements for the extrusion material, e.g. filler wire, the manufacturing may comprise a number of tightly controlled steps to ensure that the extrusion material has appropriate microstructure and physical properties to form an extrudate with the desired properties.

As will be appreciated, the extrusion material requirements will vary with the properties of the component on which the extrudate is being deposited, e.g. the type of alloy to be joined and the operating conditions applied. Despite this, there are a number of important features related to the manufacturing route and processing requirements which are generally applicable and thus apply to all extrusion material, regardless of their chemical composition. The manufacturing method of the aluminium rod and/or the aluminium extrusion material may be controlled so as to ensure that the microstructure is a deformed (fibrous) microstructure and that at the nanoscale the material comprises an aluminium matrix with dislocations and dispersoids, and wherein at least 50% of the alloying elements other than the dispersoid-forming elements and the iron are in solid solution in the aluminium matrix.

The manufacturing method of the extrusion material may comprise one or more of the following steps: melt treatment, casting, homogenizing, billet preheating, hot deformation (e.g. hot extrusion/hot rolling), controlled cooling/quenching, initial spooling, shaving, final cold drawing, cleaning and final spooling and packaging. The steps may be performed in this order (although one or more of the steps may not be carried out). For example, the method may not comprise a step of initial spooling between the cooling and the shaving steps. Additionally, the method may not comprise shaving or final cold drawing, i.e. the extrusion material may be hot deformed down to final diameter. Alternatively, the method may not comprise final cold drawing, i.e. the extrusion material may be shaved down to final diameter.

Each of the steps may be performed by a different party. For example, one or more steps (if they are performed) of melt treatment, casting, homogenizing, billet preheating, extrusion, cooling and/or initial spooling may be performed by a first party such as an aluminium metal producer. These steps may be performed to form an aluminium rod for producing an aluminium extrusion material, e.g. filler wire, for use in a hybrid metal extrusion and bonding process that may be for joining two aluminium components or depositing extrudate on a component for example. One or more steps (if they are performed) of shaving, final cold drawing, cleaning and spooling and packaging may be performed by a second party such as an aluminium wire manufacturer to manufacture an aluminium wire for use in a hybrid metal extrusion and bonding process that may be for joining two aluminium components or depositing extrudate on a component for example.

Producing the aluminium rod may involve a melt treatment, casting, homogenizing, billet preheating, hot deforming and/or cooling/quenching. These steps may be performed by an aluminium metal producer. After these steps the aluminium rod may be spooled and transported to a second party for forming an extrusion material, e.g. wire, for the HYB process from the aluminium rod.

The billet may be hot deformed to the final diameter of the extrusion material. Thus, the billet may be directly formed into the extrusion material such that the rod does not need to be spooled and transported to a second party for further processing.

Manufacturing the aluminium extrusion material may comprise receiving an aluminium rod, shaving and cold drawing the aluminium rod (if the rod was not already the correct diameter) to form the extrusion material for extrusion. After cold drawing, the extrusion material, e.g. filler wire, may be cleaned and then spooled and packaged. The extrusion material may then be transported to a third party for use in the HYB process.

The term "billet" may cover any semi-finished cast product such as an ingot, bloom, slab, billet etc.

Turning to each of these steps in turn, the melt treatment may be carried out in accordance with best industrial practice. The melt may be produced from virgin aluminium coming directly from a smelter. This is so that a low content of inclusions and impurity elements in the end-product can be guaranteed. It is preferable to form the melt from virgin aluminium rather than from recycled scrap metal. This is because excess iron coming from the scrap metal may be detrimental to the extrudate material properties. Also excess copper coming from the scrap metal may be detrimental to properties, particularly to the extrudate material corrosion resistance. Hence, besides the Al-Cu alloys belonging to the 2xxx-series, all other alloys being used in the extrusion material production should be low in copper and have a Cu content less than 0.05 wt%.

It is important that the aluminium melt contains low levels of iron and copper in particular. This is because it is not possible to refine the melt to remove these elements.

To provide the correct composition, the different alloying elements stated in the extrusion material alloy specification may be added in the correct amount and order to the clean base melt. First the major alloying elements may be added to the virgin melt, then the minor alloying elements and then grain refiners (if used).

The alloying elements stated in the extrusion material alloy specification may be added in the correct amount and sequence, according best industrial practice.

The dispersoid-forming elements, Mn, Cr, Zr and Sc, which may be used in order to prevent recrystallization from happening during subsequent thermomechanical processing, are added at this stage. As discussed above, the desired levels of these minor alloying elements in the alloys, according to the extrusion material specifications, should be within the following limits, i.e. Mn between 0 and 1.2 wt%, Cr between 0 and 0.25 wt%, Zr between 0 and 0.25 wt% and Sc between 0 to 0.25 wt%.

Also a grain refiner may be added to the melt immediately before the casting operation (e.g. AlB₂ or TiB₂) in order to refine the as-cast microstructure. These grain refiners may only be added if it has been verified that the constituent grain refining particles do not have a negative effect on the end-product properties (e.g. extrusion material surface quality and extrudate tensile ductility and impact toughness). Whether or not they will actually be harmful in a real production or joining situation may depend on the applied grain refinement practice. When the melt already contains Zr and/or Sc, the use of additional grain refiners may be deemed to be superfluous, since these two minor alloying elements also may act as grain refiners during solidification due to the Al₃Zr and Al₃Sc compound formation. Both phases are known to provide favorable sites for heterogeneous nucleation of new aluminium grains ahead of the advancing solid/liquid interface.

After the melt treatment, a casting operation may be carried out to form an aluminium billet or ingot. The casting operation may be carried out in accordance with best industrial practice.

The casting method may be a continuous or semi-continuous casting methods. The casting method may be direct chill (DC) casting. This casting operation may produce extrusion billets and/or rolling ingots used in the extrusion material production.

The cast aluminium may be high quality billets or ingots, i.e. they should meet the most stringent industrial tolerance requirements (e.g. Hydro or Alcoa standard) with regard to casting defects like segregations, porosity and hot tears.

The dimensions of these castings must or may be sufficiently large to obtain the required reduction ratios during subsequent thermomechanical processing. The desired dimension will depend on the desired final dimension of the extrusion material and the processing steps which are to be performed. The dimensions may need to be greater for billets which will be hot extruded compared to billets which will be hot rolled.

For example, in hot extrusion for aluminium rod manufacturing the minimum area reduction may be at least 10:1. In hot rolling the area reduction may be at least 5:1.

Because the use of high reduction ratios during hot forming is normally considered to be beneficial for the end-product properties, no upper limits for the area reduction need to be specified.

The cast aluminium billet may be homogenized. The homogenizing of the as-cast billets or ingots may be carried out in accordance with best industrial practice.

The main purpose of the homogenizing treatment is to refine the microstructure of the castings by (i) eliminating or minimizing microsegregations, (ii) modifying the harmful Fe-bearing constituents in the alloy which form during solidification, (iii) dissolving all equilibrium phases which tie-up solute and drain the aluminium matrix with respect to alloying elements and (iv) promoting the formation of dispersoids by the dispersoid-forming elements Mn, Cr, Zr and Sc.

During heat treatment, strict control of the homogenizing temperature may be enforced in order to avoid local melting or insufficient refinement of the microstructure through diffusion.

The homogenizing temperature will depend on the alloy composition of the aluminium billet or ingot. The homogenizing time will depend on the dimensions of the billet or ingot.

The homogenizing temperature may lie between the solidus and solvus temperature of the aluminium alloy of the billet/ingot, as defined by the equilibrium phase diagram. The homogenizing temperature may lie between the solidus and solvus temperature of the aluminium alloy of the billet and be closer to the solvus temperature than the solidus temperature, as defined by the equilibrium phase diagram. This may lead to a finer distribution of the dispersoids in the alloy.

For example, in the case of Al-Mg-Si alloys the homogenizing may be carried out in the temperature range from 530 to 580 °C for 2 to 4 hours under controlled heating and cooling conditions. If recrystallization during subsequent thermomechanical processing of the Al-Mg-Si alloys used in the extrusion material production is a problem, a precautionary action may be to homogenize the alloys containing the dispersoid-forming elements Mn and Cr at 530 to 540 °C rather than at 570 to 580 °C. This may lead to a finer distribution of the dispersoids in the alloy.

A small adjustment in the homogenizing practice may be sufficient to prevent recrystallization from happening, even during demanding hot deformation conditions, if the alloys already contain dispersoid-forming elements.

To produce the aluminium rod the billet or ingot may be hot deformed such as hot extruded or hot rolled.

The billet or ingot may be preheated before being hot deformed.

The billet or ingot preheating prior to hot deformation may be carried out in accordance with best industrial practice.

The preheating may be achieved using gas heating or induction heating.

Induction heating may be advantageous since it provides the high heating rates (higher than gas heating) and may allow the preheating to be completed within a shortest possible time before hot deformation.

It is advantageous for the heating to be as quick as possible so that reprecipitation of the previously dissolved phases during homogenizing may be prevented. If reprecipitation does occur, this may result in local melting occurring during the hot deformation steps. This could lead to formation of surface defects and cracks in the as-extruded product due to tearing and spalling. Such surface defects and cracks may make the subsequent processing, such as wire shaving and drawing, difficult.

Using again Al-Mg-Si alloys as an example, the pre-heating temperature for hot extrusion billets may typically be between 440 to 490°C. The preheating time may be between 5 to 45 minutes, depending on the billet diameter and the applied heating method.

For the aluminium billets or ingots used in manufacturing of extrusion material for the HYB process the shortest possible preheating time may be aimed at.

The billet/ingot may be extruded or hot rolled.

Hot rolling or extrusion may be used to produce aluminium rods of the appropriate length and diameter, which are suitable for subsequent shaving and wire drawing. Alternatively, hot rolling or extrusion may be used to produce aluminium rods of the desired diameter for the final extrusion material, i.e. the billet may be hot deformed to directly produce the final extrusion material, or at least the correct dimensions of the extrusion material. Thus, references herein to forming an aluminium rod may cover forming an aluminium rod which is the dimension of the extrusion material.

Extrusion may be preferable to hot rolling, provided that the desired rod quality can be achieved, however, either process can be used to form the aluminium rod.

The preferable manufacturing method, and in particular the applied hot deformation method, may depend on the composition. For example, hot extrusion may be preferable for the Al-Mg-Si and AI-Zn-Mg alloys, whereas for some Al-Cu and Al-Mg alloys hot rolling may be a better. This is because certain aluminium alloys may have a low formability that could make extrusion difficult.

The hot deformation (e.g. extrusion and/or hot rolling) may be performed to ensure that the aluminium rod produced is of the correct diameter for the following processing, such as wire shaving and drawing.

Depending on the specific type of alloy and desired extrusion material diameter, the diameter of the hot deformed rods may be 1 to 3 mm.

The diameter of the hot deformed aluminium rod may be about 1.5 to 2 times, or more than 2 times the diameter of the desired filler wire.

However, larger diameters may also be tolerated if the wire drawing alternatively is done in several steps. In the case that the wire drawing is performed in multiple steps, this may be in combination with soft annealing.

In the present context soft annealing may mean a high temperature heat treatment below the equilibrium solvus boundary of the alloy, as defined by the phase diagram. This heat treatment may have the objective of increasing the ductility of the alloy after a previous cold drawing step before continuing with the next one. If soft annealing is applied, full solution heat treatment of the extrusion material alloy may be carried out as a final step in order to make sure that all alloying elements are brought back into solid solution.

When the billet is hot extruded, the correct extrusion, i.e. ram or wheel, speed for the chosen combination of alloy composition and reduction ratio may be selected so that superheating of the aluminium in the die region is prevented, in accordance with best industrial practice. This is because superheating may cause local melting and give rise to the formation of surface defects and cracks in the as-extruded product due to tearing and spalling. In the present context best industrial practice means that the ram or wheel speed is carefully selected from knowledge of the billet composition, the billet temperature and/or the applied reduction ratio during hot extrusion. This selection may be based on experience data being available in the form of so-called extrusion limit diagrams.

During hot extrusion, where the local temperature in certain cases may increase up to about 600°C, all alloying elements (beside those being tied-up in the large Fe-bearing constituents or in small sub-microscopic dispersoids) may be in solid solution.

Provided that the applied reduction ratio (i.e. original cross-sectional area: final cross-sectional area) during extrusion is sufficiently high (i.e. greater than about 10:1), the deformation forces involved may be large enough to break-up the Fe-bearing constituents still being present in alloys after homogenizing and evenly disperse them within the aluminium matrix.

This may make the Fe-particles less harmful to properties, which, in turn, can increase the ductility, toughness and corrosion resistance of the final extrudate. On the other hand, the dispersoids, which are much smaller in size (typically of the order of 0.1 micrometer, e.g. between 0.01 and 0.5 µm), may not be significantly affected by the plastic deformation.

Because of the high temperatures and plastic strains involved during hot extrusion, there is risk that the alloys will recrystallize, unless they contain a fine distribution of dispersoids. This recrystallization is undesirable, both from an extrudate material strength and corrosion resistance point of view, and should be avoided. Therefore, all alloys being used in production of extrusion material for the HYB process should contain at least 0.05 wt% dispersoid-forming elements like Mn, Cr, Zr or Sc and at the same time be homogenized, according to best industrial practice, in order to bring out the potential of the dispersoid-forming elements through precipitation.

If hot rolling is performed, strict control of the temperature, the rolling schedule and the microstructure evolution may be enforced for the same reasons as those mentioned above for hot extrusion.

Again, in order to prevent recrystallization from happening during the forming operation the rolling ingots used in production of extrusion material for the HYB process should contain at least 0.05 wt% of dispersoid-forming elements Mn, Cr, Zr or Sc. At the same time they should be homogenized, according to best industrial practice, in order to bring out their potential through precipitation.

Hot rolling often may be carried out in several steps using rolls with successively smaller mouth openings.

During hot deformation the temperature of the billet/aluminium rod may be controlled so that it is kept above the equilibrium solvus of the alloy, as defined by the phase diagram.

If the temperature of the billet/aluminium rod falls below the solvus temperature, both equilibrium and metastable phases, which tie-up solute and drain the aluminium matrix with respect to alloying elements, may start to form. Such precipitation may be harmful for the extrusion material end-product properties because it may reduce the work hardening potential and lower the extrudate material strength and corrosion resistance.

Following hot deformation the aluminium rods may be quenched, i.e. rapidly cooled.

This quench may allow the major alloying elements to remain in solid solution down to room temperature (RT). This is because the alloys contain dispersoids, which make them quench sensitive.

Dispersoids may act as effective heterogeneous nucleation sites for different types of solute-rich metastable phases during cooling when the temperature drops below a certain level, e.g. 500°C. The formation of these metastable phases drains the surrounding aluminium matrix with respect to solute and thus may reduce the work hardening potential of the extrusion material and lower the extrudate material strength.

It has been found that once such metastable phases have formed within the aluminium alloys the solute draining may continue in an accelerating manner during subsequent the extrusion and bonding of the HYB process. This is because they can grow by diffusion, which may lead to further loss of extrudate material strength and work hardening potential.

To try to prevent this, controlled cooling of the hot deformed rods may be employed immediately after they have left the deformation device, e.g. extrusion die or roll mouth opening. This cooling may be achieved using forced air, water spraying or a combination of both. To avoid precipitation of these solute-rich stable and metastable phases during cooling, the cooling rate may be within the range from 7 to 50 K/s.

Once quenched the aluminium rods should have a deformed type microstructure and on the nano/atomic scale have an aluminium matrix with dislocations and dispersoids with at least 50% of the alloying elements other than the dispersoid-forming elements and the iron in solid solution in the matrix. The nanostructure may also comprise small iron bearing particles (less than about 4 µm in diameter) but not contain the above-mentioned detrimental stable and metastable phases.

If adequate process control is not undertaken during the manufacturing of the aluminium rods/extrusion material, solute-rich metastable precipitates may instead appear inside the aluminium matrix at room temperature after cooling along with large Fe-particles (greater than about 4 µm in diameter) and coarse solute-rich equilibrium phases. This type of structure is highly undesirable because it may reduce both the work hardening potential, the tensile yield strength and ductility, the impact toughness and the corrosion resistance of the extrudate following subsequent extrusion and bonding using the HYB process.

After controlled cooling the aluminium rods may be spooled. Once spooled the aluminium rods can be stored and/or transported before further processing to form the extrusion material. The aluminium rods may be sent to a wire manufacturer for further processing.

During prolonged room temperature storage, prior to further processing, such as wire shaving and drawing if performed, the nano- and atomic structure of the alloys may change due to cluster and GP-zone formation. This phenomenon is known as natural ageing (NA), and may for example occur in Al-Cu, Al-Mg-Si and AI-Zn-Mg alloys. This process occurs in the alloy at room temperature due to short range diffusion of solute atoms. Because the clusters/GP-zones have a low thermal stability they may readily dissolve inside the extrusion chamber on re-heating and therefore not cause problems in the HYB case. However, these nanostructures should be taken into consideration during wire shaving and cold drawing, if performed. This is because these nanostructures increase the yield strength which can affect the drawability of the extrusion material alloys.

As discussed in WO 2013/095160, the extrusion material wire diameter should be selected based on the linear dimensions of the extrusion chamber used for the HYB process. For example, the diameter of the wire may be about 7% larger than the width of the extrusion chamber. At the same time the cross-sectional area of the extrusion chamber may be about 10 % larger than the cross-sectional area of the wire in order to prevent the aluminium from blocking the extrusion chamber.

Thus it may be desirable for the wire to have an approximately constant cross-sectional shape/diameter along its length.

The diameter may have a tolerance of ±0.02 mm.

This may be achieved by drawing the rod to form the extrusion material, shaving the rod to form the extrusion material or hot deforming the billet to form the extrusion material.

It has been found that wire drawing may provide a more even product shape and diameter than extrusion or rolling. For example, in manufacturing of Φ1.6 mm aluminium wires by drawing best industrial practice implies a geometrical tolerance limit of 1.6 mm (+0.0/-0.02). This is fully acceptable in the HYB process.

As discussed above, no surface expansion with subsequent break-up of the oxide layer surrounding the material may occur during extrusion and bonding of the HYB process. Therefore, all contamination introduced via the extrusion material alloy may inevitably end-up at a bond interface, e.g. in the groove between the two components to be joined, and reduce the interfacial bond strength.

In order to prevent this from happening shaving and/or cleaning of the extrusion material may be performed before use. Depending on certain circumstances, such as the tool used to extrude the extrusion material, the shaving and/or cleaning steps are not essential.

Wire shaving may be done before the drawing operation. For example the wire shaving may remove between 0.05 to 0.5 mm, or more than 0.5mm, of the surface layer. This surface layer may be a contaminated surface layer.

The wire shaving and/or wire drawing (if these steps are performed) may be done in multiple steps. This may, or may not, be with intermediate heat treatments, such as annealing.

Wire cleaning may be performed after the drawing. The cleaning may be the final step before the extrusion material is spooled and packaged.

The surface of the extrusion material, e.g. filler wire, may be smooth and substantially free of cracks and contaminants.

All lubricants may be properly removed from the surface, such as by a cleaning operation, after the final drawing stage, before spooling and packaging.

The packaging may involve packing the spooled extrusion material in a vacuum package. This may avoid absorption of contaminants onto the surface of the wire.

If performed, wire shaving and drawing may be done cold, in one operation, without the use of intermediate heat treatment such as soft annealing.

The method may comprise only one drawing step. As a result the overall drawing ratio (i.e. the original cross-sectional area divided by the final cross-sectional area) may be lower than for typical filler wires used in fusion welding. For example, the drawing ratio may be about 2:1 to 1.2:1. If higher drawing ratios are employed, cracking of wire or fracture may occur. A high work hardening potential of the wire, as favored by a high level of alloying elements in solid solution, may reduce the risk of cracking and fracture during the subsequent wire drawing stage (if performed).

The drawing ratio may be higher than about 2:1, particularly if the drawing is carried out in multiple steps.

Therefore, the initial diameter of the aluminium rods used in the manufacturing of the HYB extrusion material may be smaller, e.g. between 1 and 3 mm, in order to facilitate shaving and drawing in one operation. The aluminium rods used in the manufacturing of the HYB extrusion material may be greater than 3mm.

Depending on the size of the extruder and the size of the joint to be filled with the filler material or the desired volume of material to be deposited, the extrusion material wire may have a diameter of about 0.6 to 2 mm, for example the wire diameter may be about 1 mm or about 1.6 mm. This may be the wire diameter for variants of the extrusion device described in WO 2013/095160.

The extrusion or rolling ratio (the original cross-sectional area divided by the final cross-sectional area) may be significantly larger than the drawing ratio. For example the extrusion ratio may be at least 5 times larger than the drawing ratio and the rolling ratio may be at least 2 times larger than the drawing ratio. This is because in the case of a extrusion material for the HYB process it may be desirable for the extrusion or rolling ratio to be relatively high to break up large precipitates in the aluminium matrix. In contrast, it may be desirable that the drawing ratio is relatively low so the drawing may be performed in a single pass in order to avoid the need for intermediate soft annealing which could be detrimental to the micro- or nano-structure of the alloy.

Typically in the production of a filler wire for fusion welding the wire is subject to a number of drawing steps and soft annealed between these. Because the structural identity will be lost following re-melting, the use of soft annealing is not critical for the filler wire properties when it is used for fusion welding. Thus, this is probably the most efficient production method for such fusion welding filler wires.

However, since soft annealing is normally carried out below the equilibrium solvus temperature of the alloy, it may inevitably lead to re-precipitation of different solute-rich stable and metastable phases inside the material. As discussed above, this can be devastating for the extrusion material, i.e. filler wire/extrudate, i.e. filler material, properties in the case of the HYB process and should be avoided.

The method of the first and/or second aspect may comprise manufacturing the extrusion material as an extrusion wire by: providing an aluminium rod; cold shaving and drawing the aluminium rod in one operation without the use of intermediate soft annealing to produce the extrusion wire.

The method of the first and/or second aspect may comprise manufacturing the extrusion material as an extrusion wire by: hot extruding an aluminium billet to provide an aluminium rod; and drawing the aluminium rod to form the extrusion wire, wherein the extrusion ratio is at least 5 times, e.g. 5 to 10 times, larger than the drawing ratio.

The method of the first and/or second aspect may comprise manufacturing the extrusion material as an extrusion wire by: hot rolling an aluminium billet to provide an aluminium rod; and drawing the aluminium rod to form the extrusion wire, wherein the rolling ratio is at least 2 times, e.g. about 2 to 5 times, larger than the drawing ratio.

If wire shaving and drawing cannot be done in one operation, full solution heat treatment may instead be carried out after the final soft annealing step (if performed) in order to recover the structure and properties of the extrusion alloy to be as described above.

Because a filler wire used for fusion welding will completely lose its structural identity because of the re-melting, its manufacturing is not optimized to obtain a specific structure which is vital for the final weld metal properties. The only important "property" that is maintained between the filler wire and the weld metal in fusion welding, e.g. metal inert gas (MIG) or laser welding, is the chemistry/composition. In contrast, in the HYB process the extrusion wire has also embedded a strong structural memory of all past manufacturing steps inside the Al-matrix, which then is conveyed to the extrudate material during subsequent extrusion and bonding. This 'structural memory' of the past production steps means that the manufacturing route and the composition/chemistry is different to those used for the production of fusion welding filler wires.

Certain preferred embodiments of the present invention will now be described by way of example only with reference to the accompanying drawings, in which:
Figure 1 is a schematic of a joint formed by the HYB process;
Figures 2a and b are micrographs of the microstructure of two experimental AA6xxx extrusion wires used in laboratory testing;
Figure 3 is a schematic of a nanostructure;
Figure 4 is a schematic of another nanostructure;
Figure 5a is a schematic of yet another nanostructure;
Figure 5b is a graph of FW alloy strength vs RT storage time, log t;
Figure 6 is a schematic showing a manufacturing route;
Figures 7a, b and c illustrate possible hot deformation methods;
Figures 8a to e show schematics of example joints and their strength levels; and
Figure 9 is a graphical representation of the overlap in Si and Mg contents between different aluminium grades belonging to the same 6xxx series.

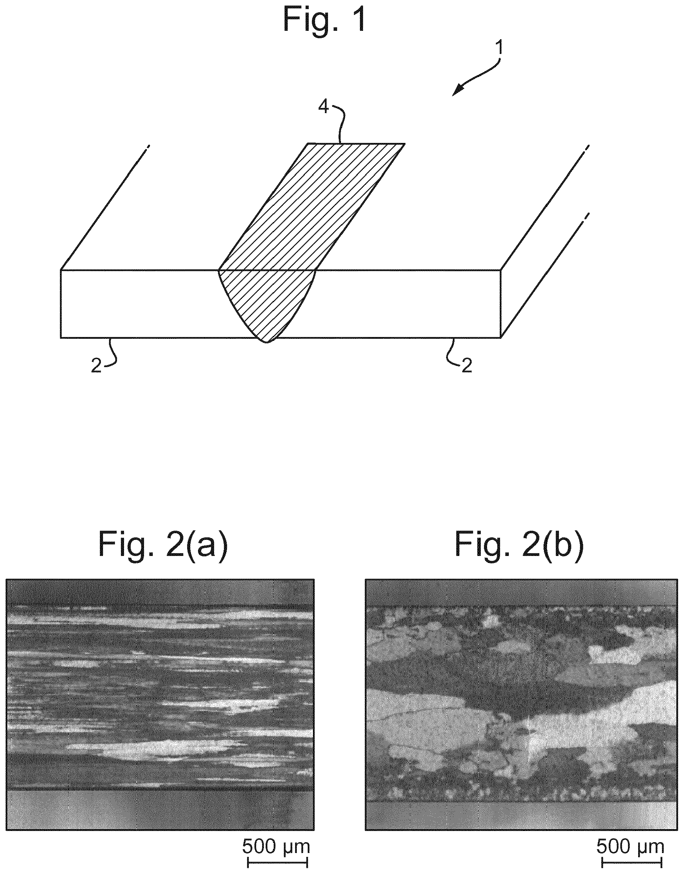

A joint 1 formed by a hybrid metal extrusion and bonding (HYB) process is shown in Figure 1. The joint 1 is formed by extruding a filler wire between two aluminium components 2 to form a filler material 4 as described in WO 2003/04775.

The filler wire may be produced by shaving and drawing an aluminium rod as discussed in greater detail below.

The filler wire may also be used to bond a resulting extrudate onto the surface of a substrate, i.e. component. Thus, the filler wire does not necessary have to fill a gap between two components but could be deposited on the surface of a component. The filler wire may thus also be referred to more generally as an extrusion material. By referring to the extrusion material as a filler wire does not imply that it has to be extruded between two components and an extrusion material deposited on the surface of a component can equally be referred to as a filler material.

In the case that the filler wire is used to join two aluminium components, the filler wire used in the HYB process may be an aluminium alloy which is in the same series as at least one aluminium alloy of the aluminium components 2.

If the filler wire is used to join an aluminium component to a non-aluminium component, or used to deposit a layer on an aluminium component, the filler wire used in the HYB process may be an aluminium alloy which is in the same series as the aluminium alloy of the aluminium component.

The filler wire is made of 2xxx, 5xxx, 6xxx, 7xxx or 8xxx aluminium alloy and the composition of the filler wire should contain 0 to 0.25 wt% iron; at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and, except when the aluminium alloy of the aluminium filler wire is in the 2xxx series, 0 to 0.05 wt% copper.

The other components of the composition may be chosen to provide a final filler material 4 with appropriate properties in view of the joint 1 being joined (or component being coated with the extrudate) and the intended application of the final product.

The filler wire may have a deformed (fibrous) microstructure as shown in Figure 2a. The microstructure should not be a recrystallized microstructure as shown in Figure 2b. Figures 2a and 2b are micrographs of the microstructures of two experimental AA6xxx filler wires. The scale in the bottom right hand corner of the micrographs shows the length of 500 µm.

The composition and production of the filler wire should be controlled so that the deformed microstructure such as that of Figure 2a is achieved rather than the recrystallized microstructure of Figure 2b. This is the same for an aluminium rod used to make the aluminium filler wire and the final filler material 4 of the joint 1.

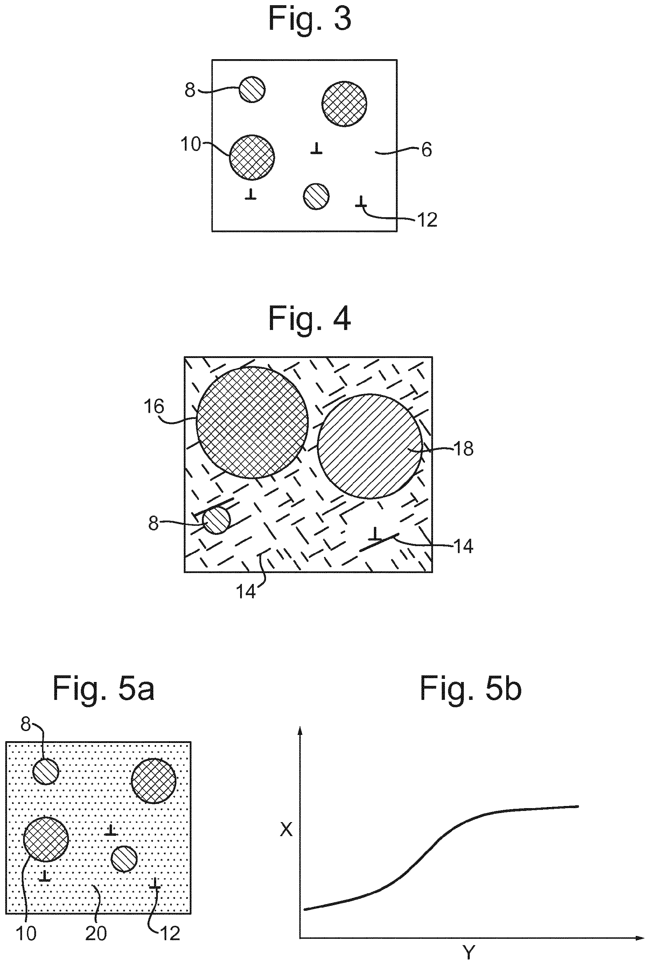

On the nanoscale the aluminium alloy of the filler wire/aluminium rod/filler material should comprise an aluminium matrix 6 with dispersoids 8, small iron particles 10 (e.g. less than 4 µm) and dislocations 12 therein as shown schematically in Figure 3. At least 50% of the alloying elements other than the dispersoid-forming elements and the iron should be in solid solution in the aluminium matrix 6.

The nanostructure should be free of metastable phases 14, large iron particles 16 (e.g. greater than 4 µm) and equilibrium phases 18. This is because these features will reduce the amount of alloying elements in solid solution and detrimentally degrade the physical properties of the aluminium alloy. Figure 4 shows schematically an undesirable nanostructure.

The micro- and nanostructure of the aluminium filler wire is important because the filler wire is not melted during the HYB process and thus the micro-and nanostructure of the filler wire will affect the micro- and nanostructure of the filler material. This in turn will greatly affect the properties of the final joint 1 prepared by the HYB process.

If the aluminium alloy is left at room temperature (which may be the case between the production of the aluminium rod and the filler wire) it will naturally age and form clusters and GP zones 20 as shown schematically in Figure 5a.

As shown in Figure 5b, which is a graph with filler wire alloy strength on the x axis and room temperature storage time in log t on the y axis, as these clusters and GP zones form, the alloy strength will increase. Whilst this should not cause a problem for the HYB process as the high temperatures during the subsequent extrusion of the filler wire will result in the clusters and GP zones 20 dissolving back into the aluminium matrix 6, it should be taken into account in the further processing of the aluminium alloy to form the aluminium filler wire.

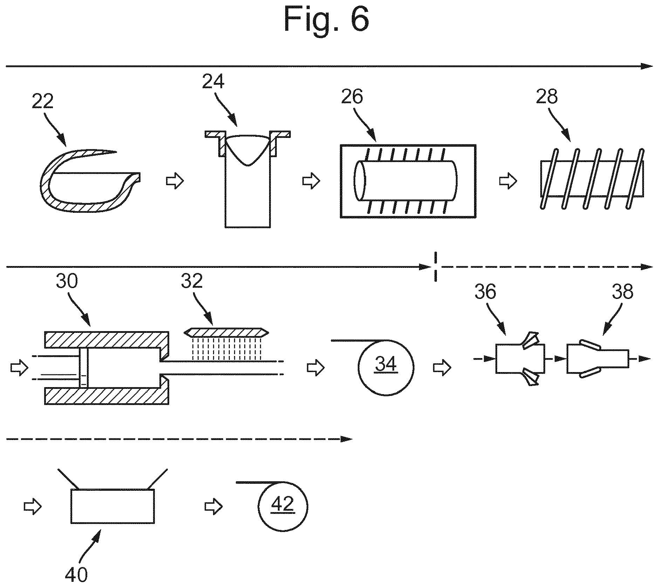

Figure 6 shows schematically a manufacturing method for manufacturing the filler wire using hot extrusion. However, other hot deformation processes, such as hot rolling, could be performed instead of hot extrusion.

The method may comprise a melt treatment 22. Virgin aluminium may be provided directly from a smelter. This will help ensure that the content of impurities such as iron and copper are at acceptable levels. Alloying elements such as the dispersoid-forming elements are added to the melt to form the desired composition. Grain refiners such as AlB₂ and TiB₂ may also be added to the melt. These may be added immediately before casting.

The aluminium melt can then be cast 24 to form an aluminium billet or ingot. This may be performed by direct chill casting.

The billet may then be homogenized 26. The homogenizing temperature will depend on the composition of the billet but it may be between the solvus and the solidus temperature of the alloy. The homogenizing temperature may be closer to the solvus temperature rather than the solidus temperature as this may create a finer dispersion of dispersoids.

The billet may then be preheated 28 and this may be by means of induction heating. The temperature to which the billet is preheated will depend on the composition of the aluminium alloy.

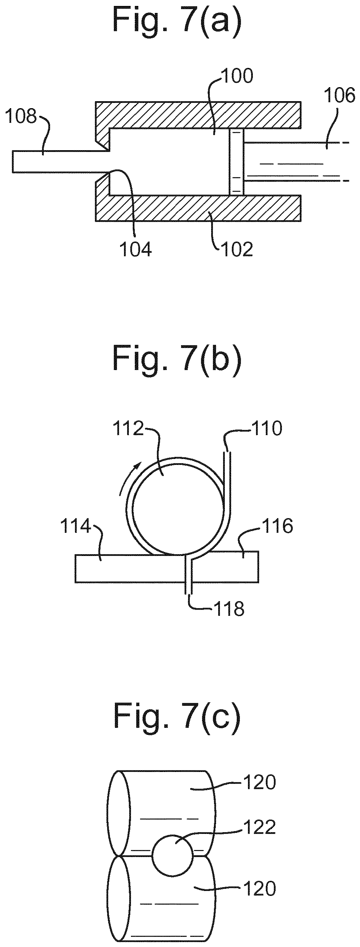

The billet may then be hot deformed 30 to form an aluminium rod which can be used for forming the filler wire. This hot deformation step 30 may be achieved by hot extrusion (as illustrated in Figures 7a or 7b) or hot rolling (as shown in Figure 7c).

Figure 7a shows a billet 100 in a container 102. The billet 100 is forced through a die 104 by action of ram 106 so as to form an aluminium rod 108.

Figure 7b, shows a billet/feedstock 110 being forced by means of a wheel 112 through a die between an abutment 114 and a shoe 116 so as to form an aluminium rod 118.

Figure 7c shows an aluminium rod 122 being rolled between two rollers 120.

The extrusion ratio (original area/final area) may be at least 10:1 and the rolling ratio (original area/final area) may be at least 5:1. Once deformed to form the aluminium rod the aluminium alloy may be quenched 32. The quenched rod may then be spooled 34 for storage and transportation before further processing to form the filler wire. These steps 22 to 34 (shown with a solid arrow) may be performed by an aluminium metal producer.

To form the filler wire the aluminium rod may be shaved 36 and drawn 38. The shaving 36 and drawing 38 may be done cold, in one operation, without the use of intermediate heat treatment such as soft annealing. This may be to ensure that the final filler wire has an appropriate microstructure without the use of detrimental soft annealing and/or expensive and time-consuming heat treatments to repair the structural damage that the previous soft annealing has caused. The drawing ratio (original area/final area) may be about 2:1 to 1.2:1, or higher.

The extrusion ratio may be about 5 to 10 times larger than the drawing ratio and the rolling ratio may be about 2 to 5 times larger than the drawing ratio.

The surface of the filler wire should be smooth and free of cracks. This is to minimise the risk of contaminants being trapped on the surface of the filler wire which may then negatively affect the quality of the final joint 1, particularly the interfacial bond strength.

After drawing 38 the wire may be cleaned 40 and then spooled and packaged 42. The wire may be packed in a sealed, vacuum packed environment. This is to try to keep the filler wire in an appropriate condition (e.g. free of contaminants on the surface) for use in the HYB process. Steps 36 to 42 (shown with a dotted arrow) may be performed by an aluminium filler wire manufacturer.

A filler wire designer may know the composition and micro/nanostructure they require for the HYB process. With this information the processing steps may be adjusted accordingly to allow the desired filler wire to be produced.

### Examples

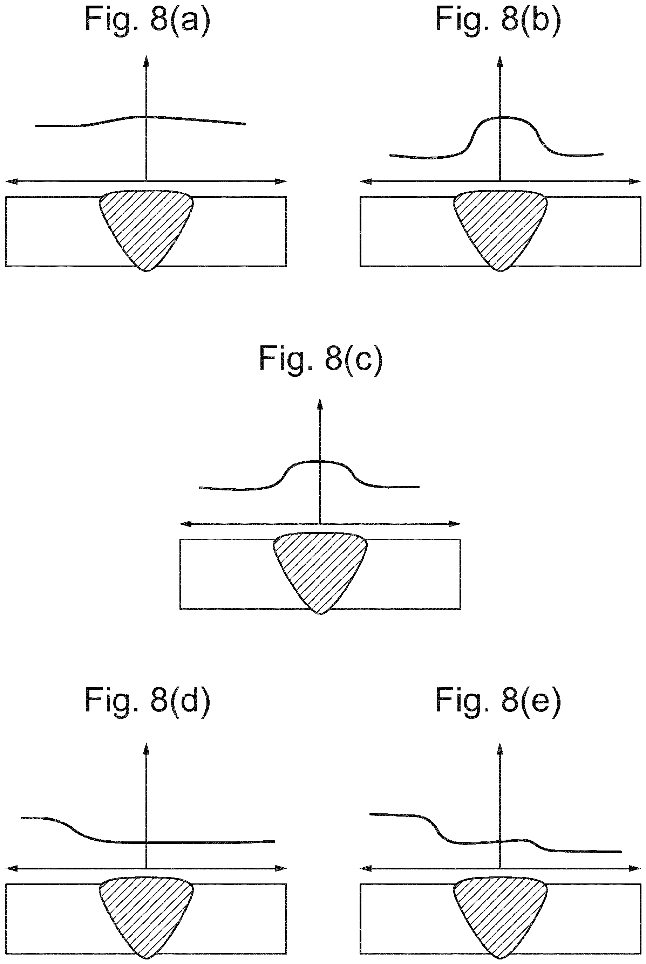

Example joints 1 are shown in Figures 8 a to e. The examples illustrate how a tailor-made filler wire of a specific composition according to the present invention will respond to butt joining of different Al-Mg-Si plates belonging to the same alloy series.

The graph above each schematic joint illustrates the relative strength of the join compared to the components being joined.

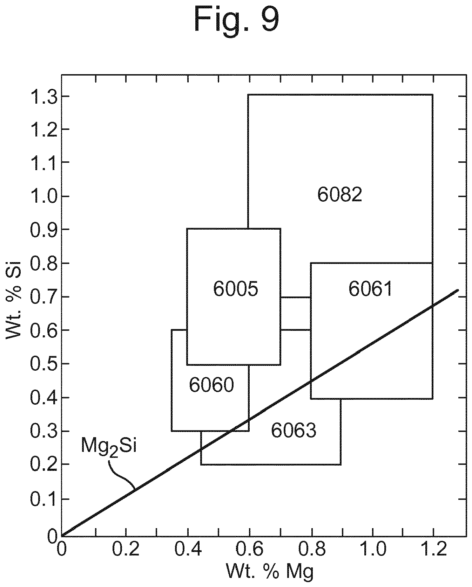

In each of the examples in Fig. 8a, 8b and 8c the filler wire composition is assumed to lie within the upper right corner of the composition window for AA6082 which is illustrated in Figure 9, i.e. the composition is relatively high in magnesium and silicon content. Moreover, the filler wire nanostructure is that illustrated in Figure 5a. The appropriate filler wire alloy designation would then be AA6xxx - grade A, where grade A means that the filler wire is high in Si and Mg.

The example in Figure 8a shows butt joining of two AA6082-T6 base plates using AA6xxx - grade A as a filler wire
The T6 temper designation means that the material of the aluminium components being joined is artificially aged to peak strength before joining. Thus, when a matching filler wire is used during the joining operation, an "even-strength-level" across the joint should be obtained, as illustrated in Fig. 8a.

The example in Figure 8b shows butt joining of AA6082-T7 base plates using AA6xxx - grade A as the filler wire.

The T7 temper designation means that the same material of the aluminium components being joined is used in the over-aged condition. Hence, its strength is lower than that of the T6 heat treated base plates in the example of Figure 8a. Accordingly, after joining the filler material strength will be higher than that of the base metal, as illustrated in Fig. 8b, a state which is referred to as filler material over-match.

The example in Figure 8c shows butt joining of AA6060-T6 base plates using AA6xxx - grade A as filler wire
The alloy designation AA6060 means that this base material of the aluminium component has a lower content of the major alloying elements Si and Mg compared to AA6082 (see Fig. 9). Hence, its peak strength will be lower than that of the T6 heat treated base plates in the example of Figure 8a. Therefore, the desired degree of filler material over-match is also achieved in this case, as illustrated in Fig. 8c, although the filler wire alloy composition is the same as the in the other two examples of figures 8a and 8b.

Figures 8d and e show examples of possible use of a specific filler wire for joining of dissimilar aluminium alloys
In both these examples the filler wire composition is assumed to lie within the middle of the composition window for AA6060 in Figure 9. Moreover, the filler wire structure is assumed to be similar to that shown in Fig. 5a. The appropriate filler wire alloy designation would then be AA6xxx - grade B, where grade B means that the filler wire is low in Si and Mg.

Figure 8d shows an example of butt joining of dissimilar AA6082 base plates (AA6082-T6 on the left-hand side and AA6082-T7 on the right hand side) using AA6xxx - grade B as filler wire.

The T6 temper designation means that the base material on the left-hand side of the dissimilar joint in Fig. 8d is artificially aged to its peak strength before joining, whereas the T7 temper designation means that the other base plate instead is used in the over-aged condition. Thus, when a filler wire of strength that matches the softest base metal is used during the joining operation, the joint strength will drop from the initial T6 value to the lower T7 base material strength, as illustrated in Fig. 8d.

Turning to Figure 8e , which shows joining AA 6082-T6 on the left hand side to AA6060-T6 on the right hand side, the alloy designation AA6082 means that this base material has a higher content of the major alloying elements Si and Mg compared to AA6060 (see Fig. 9). Hence, its peak strength will be higher than that of the T6 heat treated AA6060 base material. Accordingly, after joining, using the same filler wire as in the previous example, the filler material strength will fall in between the strength of the two base plates, as illustrated in Fig. 8e.

## Claims

1. A method of joining two components (2) using a hybrid metal extrusion and bonding process, the method comprising:
providing the two components, wherein the components each have a joining surface which is to be joined to the other component;
providing an aluminium extrusion material for use in a hybrid metal extrusion and bonding process,
wherein the aluminium extrusion material is made of 2xxx, 5xxx, 6xxx, 7xxx or 8xxx aluminium alloy,
wherein the composition of the extrusion material comprises:
0 to 0.25 wt% iron;
at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and,
except when the aluminium alloy of the aluminium extrusion material is in the 2xxx series, 0 to 0.05 wt% copper,
wherein the microstructure of the extrusion material is a deformed microstructure, and
wherein the nanostructure of the extrusion material comprises an aluminium matrix (6) with dislocations (12) and dispersoids (8), and wherein at least 50% of the alloying elements other than the dispersoid-forming elements and the iron are in solid solution in the aluminium matrix;
removing oxide from the joining surfaces of the two components, and
extruding the aluminium extrusion material between the joining surfaces of the two components.

2. A method according to claim 1, wherein at least one of the components is an aluminium component.

3. A method according to claim 2, wherein the composition of the extrusion material is of the same aluminium alloy series as the composition of at least one of the aluminium components.

4. A method of bonding an extrudate to a component (2) using a hybrid metal extrusion and bonding process, the method comprising:
providing the component, wherein the component has a surface on which the extrudate will be deposited and bonded;
providing an aluminium extrusion material for use in a hybrid metal extrusion and bonding process,
wherein the aluminium extrusion material is made of 2xxx, 5xxx, 6xxx, 7xxx or 8xxx aluminium alloy,
wherein the composition of the extrusion material comprises:
0 to 0.25 wt% iron;
at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and,
except when the aluminium alloy of the aluminium extrusion material is in the 2xxx series, 0 to 0.05 wt% copper,
wherein the microstructure of the extrusion material is a deformed microstructure, and
wherein the nanostructure of the extrusion material comprises an aluminium matrix (6) with dislocations (12) and dispersoids (8), and wherein at least 50% of the alloying elements other than the dispersoid-forming elements and the iron are in solid solution in the aluminium matrix;
removing oxide from the surface of the component, and
extruding the aluminium extrusion material onto the surface of the component.

5. The method of claim 4, wherein the component is an aluminium component.

6. The method of claim 5, wherein the composition of the extrusion material is of the same aluminium alloy series as the composition of the aluminium component.

7. The method of any preceding claim, wherein the nanostructure of the extrusion material comprises small iron particles (10) up to 4µm in size, and/or wherein the nanostructure is free of solute-rich metastable precipitates (14), large iron particles (16) greater than 4µm in size and coarse solute-rich equilibrium phases (18) wherein the particle size is determined using optical or scanning electron microscopy.

8. The method of any preceding claim, wherein the microstructure is not a recrystallized microstructure; and/or wherein the length to width ratio of the grains of the microstructure is at least 5:1.

9. The method of any preceding claim, wherein the extrusion material comprises a grain refiner.

10. The method of any preceding claim, wherein the extrusion material is a filler wire.

11. A method according to any preceding claim, further comprising the step of manufacturing the aluminium extrusion material by:
providing an aluminium rod (108;118;122), wherein the aluminium rod is made of 2xxx, 5xxx, 6xxx, 7xxx or 8xxx aluminium alloy,
wherein the composition of the aluminium rod comprises:
0 to 0.25 wt% iron;
at least 0.05 wt% dispersoid-forming elements, wherein the dispersoid-forming elements comprise 0 to 1.2 wt% manganese, 0 to 0.25 wt% chromium, 0 to 0.25 wt% zirconium and 0 to 0.25 wt% scandium; and,
except when the aluminium alloy of the aluminium rod is in the 2xxx series, 0 to 0.05 wt% copper,
wherein the microstructure of the aluminium rod is a deformed microstructure; and
wherein the nanostructure of the aluminium rod comprises an aluminium matrix (6) with dislocations (12) and dispersoids (8), and wherein at least 50% of the alloying elements other than the dispersoid-forming elements and the iron are in solid solution in the aluminium matrix; and
deforming the aluminium rod to form the aluminium extrusion material, wherein the microstructure of the extrusion material is a deformed microstructure; and wherein the nanostructure of the extrusion material comprises an aluminium matrix (6) with dislocations (12) and dispersoids (8), and wherein at least 50% of the alloying elements other than the dispersoid-forming elements and the iron are in solid solution in the aluminium matrix.

12. A method according to claim 11, wherein deforming the aluminium rod comprises:
cold shaving (36) the aluminium rod; and
drawing (38) the aluminium rod;
preferably wherein the cold shaving and drawing of the aluminium rod are performed in one operation without the use of an intermediate heat treatment step; and/or wherein the drawing ratio is about 2:1 to 1.2:1; and/or wherein wire cleaning (40) is performed after drawing.

13. A method according to claim 11 or 12, further comprising the step of manufacturing the aluminium rod (108;118;122) by:
providing an aluminium melt, wherein the aluminium melt is made of 2xxx, 5xxx, 6xxx, 7xxx or 8xxx aluminium alloy, and wherein the composition of the aluminium melt comprises:
0 to 0.25 wt% iron;
at least 0.05 wt% dispersoid-forming elements, wherein the dispersoid forming elements comprise 0 to 1.2 wt% manganese, 0 to 0.25 wt% chromium, 0 to 0.25 wt% zirconium and 0 to 0.25 wt% scandium; and,
except when the aluminium alloy of the aluminium rod is in the 2xxx series, 0 to 0.05 wt% copper;
casting (24) the aluminium melt to produce an aluminium billet (100),
homogenizing (26) the aluminium billet;
hot deforming (30) the billet to form the aluminium rod; and
quenching (33) the aluminium rod,
wherein the microstructure of the quenched aluminium rod is a deformed microstructure; and
wherein the nanostructure of the quenched aluminium rod comprises an aluminium matrix (6) with dislocations (12) and dispersoids (8), and wherein at least 50% of the alloying elements other than the dispersoid-forming elements and the iron are in solid solution in the aluminium matrix.

14. A method according to claim 13, wherein the aluminium melt is produced from virgin aluminium; and/or wherein the casting is direct chill casting; and/or wherein the homogenizing temperature is between the solidus and solvus temperature of the aluminium alloy of the billet and is closer to the solvus temperature than the solidus temperature, as defined by the equilibrium phase diagram; and/or wherein the billet is preheated (28) by induction heating before hot deformation; and/or wherein during hot deformation the temperature of the billet is controlled so that it is kept above the equilibrium solvus of the alloy, as defined by the equilibrium phase diagram; and/or wherein wherein when the material is hot extruded the extrusion ratio is at least 5 times larger than the drawing ratio and when the material is hot rolled the rolling ratio is at least 2 times larger than the drawing ratio.

15. A method according to claim 13 or 14, wherein the hot deformation is hot extrusion and wherein the minimum area reduction is at least 10:1, or wherein the hot deformation is hot rolling and wherein the area reduction is at least 5:1.

16. A method according to any of claims 13 to 15, wherein the diameter of the hot deformed aluminium rod is about 1.5 to 2 times the diameter of the desired extrusion material.

17. A joint (1) formed from the method of any of claims 1 to 3, or the method of any of claims 7 to 16 when dependent on any of claims 1 to 3, the joint comprising:
the two components (2); and
an aluminium filler material (4) therebetween, the aluminium filler material formed as a result of the step of extruding the aluminium extrusion material.

## Patentansprüche

1. Verfahren zum Verbinden zweier Komponenten (2) unter Verwendung eines Hybrid-Metall-Extrusions- und Bondingprozesses, wobei das Verfahren umfasst:
Bereitstellen der beiden Komponenten, wobei die Komponenten jeweils eine Verbindungsfläche aufweisen, die mit der anderen Komponente verbunden werden soll;
Bereitstellen eines Aluminium-Extrusionsmaterials zur Verwendung in einem Hybrid-Metall-Extrusion- und Bondingprozess,
wobei das Aluminium-Extrusionsmaterial aus 2xxx, 5xxx, 6xxx, 7xxx oder 8xxx Aluminiumlegierung hergestellt ist,
wobei die Zusammensetzung des Extrusionsmaterials umfasst:
0 bis 0,25 Gew.-% Eisen;
mindestens 0,05 Gew.-% Dispersoid-bildende Elemente, wobei die Dispersoid-bildenden Elemente 0 bis 1,2 Gew.-% Mangan, 0 bis 0,25 Gew.-% Chrom, 0 bis 0,25 Gew.-% Zirkonium und 0 bis 0,25 Gew.-% Scandium umfassen; und,
außer wenn die Aluminiumlegierung des Aluminium-Extrusionsmaterials der Reihe 2xxx angehört, 0 bis 0,05 Gew.-% Kupfer,
wobei die Mikrostruktur des Extrusionsmaterials eine verformte Mikrostruktur ist, und
wobei die Nanostruktur des Extrusionsmaterials eine Aluminiummatrix (6) mit Versetzungen (12) und Dispersoiden (8) umfasst, und wobei mindestens 50% der Legierungselemente, mit Ausnahme der Dispersoid-bildenden Elementen und des Eisens, in Feststofflösung in der Aluminiummatrix vorliegen;
Entfernen von Oxid von den Verbindungsflächen der beiden Komponenten, und
Extrudieren des Aluminium-Extrusionsmaterials zwischen den Verbindungsflächen der beiden Komponenten.

2. Verfahren nach Anspruch 1, wobei mindestens eine der Komponenten eine Aluminiumkomponente ist.

3. Verfahren nach Anspruch 2, wobei die Zusammensetzung des Extrusionsmaterials aus der gleichen Aluminiumlegierungsreihe wie die Zusammensetzung mindestens einer der Aluminiumkomponenten besteht.

4. Verfahren zum Bonden eines Extrudats mit einer Komponente (2) unter Verwendung eines Hybrid-Metall-Extrusions- und Verbindungsverfahrens, wobei das Verfahren umfasst:
Bereitstellen der Komponente, wobei die Komponente eine Oberfläche aufweist, auf der das Extrudat abgeschieden und gebondet wird;
Bereitstellen eines Aluminium-Extrusionsmaterials zur Verwendung in einem hybriden Metall-Extrusions- und Bondingprozess,
wobei das Aluminium-Extrusionsmaterial aus 2xxx, 5xxx, 6xxx, 7xxx oder 8xxx Aluminiumlegierung hergestellt ist,
wobei die Zusammensetzung des Extrusionsmaterials umfasst:
0 bis 0,25 Gew.-% Eisen;
mindestens 0,05 Gew.-% Dispersoid-bildende Elemente, wobei die Dispersoid-bildenden Elemente 0 bis 1,2 Gew.-% Mangan, 0 bis 0,25 Gew.-% Chrom, 0 bis 0,25 Gew.-% Zirkonium und 0 bis 0,25 Gew.-% Scandium umfassen; und
außer wenn die Aluminiumlegierung des Aluminium-Extrusionsmaterials der Reihe 2xxx angehört, 0 bis 0,05 Gew.-% Kupfer,
wobei die Mikrostruktur des Extrusionsmaterials eine verformte Mikrostruktur ist, und
wobei die Nanostruktur des Extrusionsmaterials eine Aluminiummatrix (6) mit Versetzungen (12) und Dispersoiden (8) umfasst, und wobei mindestens 50% der Legierungselemente, mit Ausnahme der Dispersoid-bildenden Elementen und des Eisens, in Feststofflösung in der Aluminiummatrix vorliegen;
Entfernen von Oxid von der Oberfläche der Komponente, und
Extrudieren des Aluminium-Extrusionsmaterials auf die Oberfläche der Komponente.

5. Verfahren nach Anspruch 4, wobei die Komponente eine Aluminiumkomponente ist.

6. Verfahren nach Anspruch 5, wobei die Zusammensetzung des Extrusionsmaterials aus der gleichen Aluminiumlegierungsreihe wie die Zusammensetzung der Aluminiumkomponente besteht.

7. Verfahren nach einem der vorstehenden Ansprüche, wobei die Nanostruktur des Extrusionsmaterials kleine Eisenpartikel (10) mit einer Größe von bis zu 4 µm umfasst, und/oder wobei die Nanostruktur frei von gelösten, reichen, metastabilen Niederschlägen (14), großen Eisenpartikeln (16) mit einer Größe von mehr als 4 µm und groben, gelösten, reichen Gleichgewichtsphasen (18) ist, wobei die Partikelgröße unter Verwendung von optischer oder Rasterelektronenmikroskopie bestimmt wird.

8. Verfahren nach einem der vorstehenden Ansprüche, wobei die Mikrostruktur keine rekristallisierte Mikrostruktur ist; und/oder wobei das Verhältnis von Länge zu Breite der Körner der Mikrostruktur mindestens 5:1 beträgt.

9. Verfahren nach einem der vorstehenden Ansprüche, wobei das Extrusionsmaterial einen Kornverfeinerer umfasst.

10. Verfahren nach einem der vorstehenden Ansprüche, wobei das Extrusionsmaterial ein Fülldraht ist.

11. Verfahren nach einem der vorstehenden Ansprüche, weiter umfassend den Schritt der Herstellung des Aluminium-Extrusionsmaterials durch:
Bereitstellen einer Aluminiumstange (108; 118; 122), wobei die Aluminiumstange aus einer Aluminiumlegierung mit 2xxx, 5xxx, 6xxx, 7xxx oder 8xxx hergestellt ist,
wobei die Zusammensetzung der Aluminiumstange umfasst:
0 bis 0,25 Gew.-% Eisen;
mindestens 0,05 Gew.-% Dispersoid-bildende Elemente, wobei die Dispersoid-bildenden Elemente 0 bis 1,2 Gew.-% Mangan, 0 bis 0,25 Gew.-% Chrom, 0 bis 0,25 Gew.-% Zirkonium und 0 bis 0,25 Gew.-% Scandium umfassen; und
außer wenn die Aluminiumlegierung der Aluminiumstange der Reihe 2xxx angehört, 0 bis 0,05 Gew.-% Kupfer,
wobei die Mikrostruktur der Aluminiumstange eine verformte Mikrostruktur ist; und
wobei die Nanostruktur der Aluminiumstange eine Aluminiummatrix (6) mit Versetzungen (12) und Dispersoiden (8) umfasst, und wobei mindestens 50% der Legierungselemente, mit Ausnahme der Dispersoid-bildenden Elementen und des Eisens, in Feststofflösung in der Aluminiummatrix vorliegen; und
Verformen der Aluminiumstange zur Bildung des Aluminium-Extrusionsmaterials, wobei die Mikrostruktur des Extrusionsmaterials eine verformte Mikrostruktur ist; wobei die Nanostruktur des Extrusionsmaterials eine Aluminiummatrix (6) mit Versetzungen (12) und Dispersoiden (8) umfasst, und wobei mindestens 50% der Legierungselemente, mit Ausnahme der Dispersoid-bildenden Elementen und des Eisens, in Feststofflösung in der Aluminiummatrix vorliegen.

12. Verfahren nach Anspruch 11, wobei das Verformen der Aluminiumstange umfasst:
Kaltspanen (36) der Aluminiumstange; und
Ziehen (38) der Aluminiumstange;
bevorzugt wobei das Kaltspanen und das Ziehen der Aluminiumstange in einem Arbeitsgang ohne die Verwendung eines zwischengeschalteten Wärmebehandlungsschrittes durchgeführt werden; und/oder wobei das Ziehverhältnis etwa 2:1 bis 1,2:1 beträgt; und/oder wobei die Drahtreinigung (40) nach dem Ziehen durchgeführt wird.

13. Verfahren nach Anspruch 11 oder 12, weiter umfassend den Schritt der Herstellung der Aluminiumstange (108; 118; 122) durch:
Bereitstellen einer Aluminiumschmelze, wobei die Aluminiumschmelze aus 2xxx, 5xxx, 6xxx, 7xxx oder 8xxx Aluminiumlegierung hergestellt ist, und wobei die Zusammensetzung der Aluminiumschmelze umfasst:
0 bis 0,25 Gew.-% Eisen;
mindestens 0,05 Gew.-% Dispersoid-bildende Elemente, wobei die Dispersoid-bildenden Elemente 0 bis 1,2 Gew.-% Mangan, 0 bis 0,25 Gew.-% Chrom, 0 bis 0,25 Gew.-% Zirkonium und 0 bis 0,25 Gew.-% Scandium umfassen; und
außer wenn die Aluminiumlegierung der Aluminiumstange der Reihe 2xxx angehört, 0 bis 0,05 Gew.-% Kupfer;
Gießen (24) der Aluminiumschmelze zur Herstellung eines Aluminiumbarrens (100),
Homogenisieren (26) des Aluminiumbarrens;
Warmverformen (30) des Barrens zur Bildung der Aluminiumstange; und
Abschrecken (33) der Aluminiumstange,
wobei die Mikrostruktur der abgeschreckten Aluminiumstange eine verformte Mikrostruktur ist; und
wobei die Nanostruktur der abgeschreckten Aluminiumstange eine Aluminiummatrix (6) mit Versetzungen (12) und Dispersoiden (8) umfasst, und wobei mindestens 50% der Legierungselemente, mit Ausnahme der Dispersoid-bildenden Elementen und des Eisens, in Feststofflösung in der Aluminiummatrix vorliegen.

14. Verfahren nach Anspruch 13, wobei die Aluminiumschmelze aus Neualuminium hergestellt wird; und/oder wobei das Gießen ein direktes Kokillengießen ist; und/oder wobei die Homogenisierungstemperatur zwischen der Solidus- und Solvus-Temperatur der Aluminiumlegierung des Barrens liegt und näher an der Solvus-Temperatur liegt als die Solidus-Temperatur, wie durch das Gleichgewichtsphasendiagramm definiert; und/oder wobei der Barren vor der Warmverformung durch Induktionserwärmung vorgewärmt (28) wird; und/oder wobei während der Warmverformung die Temperatur des Barrens so gesteuert wird, dass sie über dem Gleichgewichts-Solvus der Legierung, wie durch das Gleichgewichts-Phasendiagramm definiert, gehalten wird; und/oder wobei, wenn das Material warmextrudiert wird, das Extrusionsverhältnis mindestens 5 mal größer als das Ziehverhältnis ist und wenn das Material warmgewalzt wird, das Walzverhältnis mindestens 2 mal größer als das Ziehverhältnis ist.

15. Verfahren nach Anspruch 13 oder 14, wobei die Warmverformung Warmextrudieren ist und wobei die minimale Flächenreduktion mindestens 10:1 beträgt, oder wobei die Warmverformung Warmwalzen ist und wobei die Flächenreduktion mindestens 5:1 beträgt.

16. Verfahren nach einem der Ansprüche 13 bis 15, wobei der Durchmesser der warmverformten Aluminiumstange etwa das 1,5- bis 2-fache des Durchmessers des gewünschten Extrusionsmaterials beträgt.

17. Verbindung (1), die aus dem Verfahren nach einem der Ansprüche 1 bis 3 oder dem Verfahren nach einem der Ansprüche 7 bis 16 gebildet wird, wenn sie von einem der Ansprüche 1 bis 3 abhängig ist, wobei die Verbindung umfasst:
die beiden Komponenten (2); und
ein Aluminium-Füllmaterial (4) dazwischen, wobei das Aluminium-Füllmaterial als Ergebnis des Schrittes des Extrudierens des Aluminium- Extrusionsmaterials gebildet wird.

## Revendications

1. Procédé d'assemblage de deux composants (2) en utilisant un process d'extrusion et de liaison de métal hybride, le procédé comprenant :
la fourniture des deux composants, dans lequel les composants ont chacun une surface d'assemblage qui doit être assemblée avec l'autre composant ;
la fourniture d'un matériau d'extrusion d'aluminium pour utilisation dans un processus d'extrusion et de liaison de métal hybride,
dans lequel le matériau d'extrusion d'aluminium est constitué d'un alliage d'aluminium 2xxx, 5xxx, 6xxx, 7xxx ou 8xxx,
dans lequel la composition du matériau d'extrusion comprend :
0 à 0,25 % en poids de fer ;
au moins 0,05 % en poids d'éléments formateurs de dispersoïdes, dans lequel les éléments formateurs de dispersoïdes comprennent 0 à 1,2 % en poids de manganèse, 0 à 0,25 % en poids de chrome, 0 à 0,25 % en poids de zirconium et 0 à 0,25 % en poids de scandium ; et,
excepté lorsque l'alliage d'aluminium du matériau d'extrusion d'aluminium se situe dans la série 2xxx, 0 à 0,05 % en poids de cuivre,
dans lequel la microstructure du matériau d'extrusion est une microstructure déformée et
dans lequel la nanostructure du matériau d'extrusion comprend une matrice d'aluminium (6) avec des dislocations (12) et des dispersoïdes (8) et dans lequel au moins 50 % des éléments d'alliage autres que les éléments formateurs de dispersoïdes et le fer sont en solution solide dans la matrice d'aluminium ;
l'élimination de l'oxyde des surfaces d'assemblage des deux composants et
l'extrusion du matériau d'extrusion d'aluminium entre les surfaces d'assemblage des deux composants.

2. Procédé selon la revendication 1, dans lequel au moins l'un des composants est un composant d'aluminium.

3. Procédé selon la revendication 2, dans lequel la composition du matériau d'extrusion appartient à la même série d'alliages d'aluminium que la composition d'au moins l'un des composants d'aluminium.

4. Procédé de liaison d'un extrudat avec un composant (2) en utilisant un process d'extrusion et de liaison de métal hybride, le procédé comprenant :
la fourniture du composant, dans lequel le composant a une surface sur laquelle l'extrudat sera déposé et lié ;
la fourniture d'un matériau d'extrusion d'aluminium pour utilisation dans un processus d'extrusion et de liaison de métal hybride,
dans lequel le matériau d'extrusion d'aluminium est constitué d'un alliage d'aluminium 2xxx, 5xxx, 6xxx, 7xxx ou 8xxx,
dans lequel la composition du matériau d'extrusion comprend :
0 à 0,25 % en poids de fer ;
au moins 0,05 % en poids d'éléments formateurs de dispersoïdes, dans lequel les éléments formateurs de dispersoïdes comprennent 0 à 1,2 % en poids de manganèse, 0 à 0,25 % en poids de chrome, 0 à 0,25 % en poids de zirconium et 0 à 0,25 % en poids de scandium ; et,
excepté lorsque l'alliage d'aluminium du matériau d'extrusion d'aluminium se situe dans la série 2xxx, 0 à 0,05 % en poids de cuivre,
dans lequel la microstructure du matériau d'extrusion est une microstructure déformée et
dans lequel la nanostructure du matériau d'extrusion comprend une matrice d'aluminium (6) avec des dislocations (12) et des dispersoïdes (8) et dans lequel au moins 50 % des éléments d'alliage autres que les éléments formateurs de dispersoïdes et le fer sont en solution solide dans la matrice d'aluminium ;
l'élimination de l'oxyde de la surface du composant et
l'extrusion du matériau d'extrusion d'aluminium sur la surface du composant.

5. Procédé selon la revendication 4, dans lequel le composant est un composant d'aluminium.

6. Procédé selon la revendication 5, dans lequel la composition du matériau d'extrusion appartient à la même série d'alliages d'aluminium que la composition du composant d'aluminium.

7. Procédé selon l'une quelconque revendication précédente, dans lequel la nanostructure du matériau d'extrusion comprend de petites particules de fer (10) jusqu'à 4 µm de taille et/ou
dans lequel la nanostructure est exempte de précipités métastables (14) riches en soluté, de grosses particules de fer (16) de taille supérieure à 4 µm et de phases d'équilibre grossières (18) riches en soluté, dans lequel la taille particulaire est déterminée en utilisant une microscopie optique ou électronique à balayage.

8. Procédé selon l'une quelconque revendication précédente, dans lequel la microstructure n'est pas une microstructure recristallisée ; et/ou le rapport de la longueur à la largeur des grains de la microstructure est d'au moins 5:1.

9. Procédé selon l'une quelconque revendication précédente, dans lequel le matériau d'extrusion comprend un affineur de grains.

10. Procédé selon l'une quelconque revendication précédente, dans lequel le matériau d'extrusion est un fil d'apport.

11. Procédé selon l'une quelconque revendication précédente, comprenant en outre l'étape de fabrication du matériau d'extrusion d'aluminium par :
la fourniture d'une tige d'aluminium (108 ; 118 ; 122), dans lequel la tige d'aluminium est constituée d'un alliage d'aluminium 2xxx, 5xxx, 6xxx, 7xxx ou 8xxx,
dans lequel la composition de la tige d'aluminium comprend :
0 à 0,25 % en poids de fer ;
au moins 0,05 % en poids d'éléments formateurs de dispersoïdes, dans lequel les éléments formateurs de dispersoïdes comprennent 0 à 1,2 % en poids de manganèse, 0 à 0,25 % en poids de chrome, 0 à 0,25 % en poids de zirconium et 0 à 0,25 % en poids de scandium ; et,
excepté lorsque l'alliage d'aluminium de la tige d'aluminium se situe dans la série 2xxx, 0 à 0,05 % en poids de cuivre,
dans lequel la microstructure de la tige d'aluminium est une microstructure déformée ; et
dans lequel la nanostructure de la tige d'aluminium comprend une matrice d'aluminium (6) avec des dislocations (12) et des dispersoïdes (8) et dans lequel au moins 50 % des éléments d'alliage autres que les éléments formateurs de dispersoïdes et le fer sont en solution solide dans la matrice d'aluminium ; et
la déformation de la tige d'aluminium pour former le matériau d'extrusion d'aluminium, dans lequel la microstructure du matériau d'extrusion est une microstructure déformée ; et dans lequel la nanostructure du matériau d'extrusion comprend une matrice d'aluminium (6) avec des dislocations (12) et des dispersoïdes (8), et dans lequel au moins 50 % des éléments d'alliage autres que les éléments formateurs de dispersoïdes et le fer sont en solution solide dans la matrice d'aluminium.

12. Procédé selon la revendication 11, dans lequel la déformation de la tige d'aluminium comprend :
la rectification à froid (36) de la tige d'aluminium ; et
l'étirage (38) de la tige d'aluminium ;
de préférence dans lequel la rectification à froid et l'étirage de la tige d'aluminium sont effectués en une seule opération sans utiliser une étape de traitement à chaud intermédiaire ; et/ou dans lequel le rapport d'étirage est d'environ 2:1 à 1,2:1 ; et/ou dans lequel le nettoyage (40) du fil d'apport est effectué après étirage.

13. Procédé selon la revendication 11 ou 12, comprenant en outre l'étape de fabrication de la tige d'aluminium (108 ; 118 ; 122) par :
la fourniture d'un bain d'aluminium, dans lequel le bain d'aluminium est constitué d'un alliage d'aluminium 2xxx, 5xxx, 6xxx, 7xxx ou 8xxx et dans lequel la composition du bain d'aluminium comprend :
0 à 0,25 % en poids de fer ;
au moins 0,05 % en poids d'éléments formateurs de dispersoïdes, dans lequel les éléments formateurs de dispersoïdes comprennent 0 à 1,2 % en poids de manganèse, 0 à 0,25 % en poids de chrome, 0 à 0,25 % en poids de zirconium et 0 à 0,25 % en poids de scandium ; et,
excepté lorsque l'alliage d'aluminium de la tige d'aluminium se situe dans la série 2xxx, 0 à 0,05 % en poids de cuivre,
la coulée (24) du bain d'aluminium pour produire une billette d'aluminium (100),
l'homogénéisation (26) de la billette d'aluminium ;
la déformation à chaud (30) de la billette pour former la tige d'aluminium ; et
la trempe (33) de la tige d'aluminium,
dans lequel la microstructure de la tige d'aluminium trempée est une microstructure déformée ; et
dans lequel la nanostructure de la tige d'aluminium trempée comprend une matrice d'aluminium (6) avec des dislocations (12) et des dispersoïdes (8) et dans lequel au moins 50 % des éléments d'alliage autres que les éléments formateurs de dispersoïdes et le fer sont en solution solide dans la matrice d'aluminium.

14. Procédé selon la revendication 13, dans lequel le bain d'aluminium est produit à partir d'aluminium vierge ; et/ou la coulée est une coulée en lingotière ouverte ; et/ou dans lequel la température d'homogénéisation se situe entre la température du solidus et la température de solvus de l'alliage d'aluminium de la billette et est plus proche de la température de solvus que de la température du solidus, comme défini par le diagramme de phases à l'équilibre ; et/ou dans lequel la billette est préchauffée (28) par chauffage par induction avant déformation à chaud ; et/ou dans lequel, au cours de la déformation à chaud, la température de la billette est commandée de sorte qu'elle soit maintenue au-dessus de la température de solvus à l'équilibre de l'alliage, comme défini par le diagramme de phase d'équilibre ; et/ou dans lequel, lorsque le matériau est extrudé à chaud, le rapport d'extrusion est au moins 5 fois plus grand que le rapport d'étirage et lorsque le matériau est laminé à chaud, le rapport de laminage est au moins 2 fois plus grand que le rapport d'étirage.

15. Procédé selon la revendication 13 ou 14, dans lequel la déformation à chaud est une extrusion à chaud et dans lequel la réduction de surface minimale est d'au moins 10:1 ou dans lequel la déformation à chaud est un laminage à chaud et dans lequel la réduction de surface est d'au moins 5:1.

16. Procédé selon l'une quelconque des revendications 13 à 15, dans lequel le diamètre de la tige d'aluminium déformée à chaud est d'environ 1,5 à 2 fois le diamètre du matériau d'extrusion souhaité.

17. Assemblage (1) formé par le procédé selon l'une quelconque des revendications 1 à 3, ou procédé selon l'une quelconque des revendications 7 à 16 dans la mesure où elles dépendent de l'une quelconque des revendications 1 à 3, l'assemblage comprenant :
les deux composants (2) ; et
un matériau d'apport d'aluminium (4) entre eux, le matériau d'apport d'aluminium étant formé à la suite de l'étape d'extrusion du matériau d'extrusion d'aluminium.
